# EUROPEAN PATENT APPLICATION

(11) **EP 4 818 788 A1**
(43) Date of publication of application: **07.10.2026**
(21) Application number: 24913703.5
(22) Date of filing: 27.12.2024
(51) Int. Cl.: G02B 27/01, G02B 13/00, G02B 13/18, G02B 27/28, G02B 5/30

(54) **WEARABLE ELECTRONIC DEVICE INCLUDING LENS ASSEMBLY**

(30) Priority: 28.12.2023 KR 20230194153; 13.03.2024 KR 20240035205
(71) Applicant: Samsung Electronics Co., Ltd., Suwon-si, Gyeonggi-do 16677 (KR)
(72) Inventor: CHOI, Dongok, Suwon-si Gyeonggi-do 16677 (KR); HEU, Min, Suwon-si Gyeonggi-do 16677 (KR); KWAK, Hokeun, Suwon-si Gyeonggi-do 16677 (KR)
(74) Representative: Appleyard Lees IP LLP
(86) International application number: PCT/KR2024/021327
(87) International publication number: WO 2025/143899

(57) **Abstract**

A display apparatus of the present invention includes a display configured to output light and a lens assembly configured to guide the light output from the display, toward a user' eye, wherein the lens assembly includes: at least three lenses sequentially arranged from the user's eye toward the display along the optical axis; and a polarization assembly, and the polarization assembly includes a first polarization portion, a beam splitter, and a second polarization portion, which are sequentially arranged from the user's eye toward the display, at least one of the at least three lenses may have an Abbe number of 40 or less and negative refractive power, and the beam splitter of the polarization assembly may include a reflective surface formed as an aspherical surface without an inflection point.

## Description

### [Technical Field]

Embodiment(s) of the disclosure relate to an electronic device, e.g., a wearable electronic device including a lens assembly.

### [Background Art]

An electronic device for portable purposes, such as an electronic organizer, a portable multimedia player, a mobile communication terminal, or a tablet PC, generally includes a display member (e.g., a display module) and a battery, and has a bar-type, folder-type, or sliding-type exterior due to the shape of the display member or the battery. Recently, as the performance of display members and batteries has enhanced and they have been downsized, an electronic device that may be worn on a part of the body, such as a wrist or head, or in the form of clothing (hereinafter, "wearable electronic device") has emerged.

Examples of wearable electronic devices may include a head mounting device (HMD), smart glasses, a smart watch (or band), a contact lens-type device, a ring-type device, and a clothing/shoe/glove-type device. Such a body-wearable electronic device is easy to carry and may enhance user accessibility.

As an example, a head-mounted wearable device is a device used while worn on a user's head or face, which projects images onto the user's retina to allow viewing of a virtual image in a three-dimensional space. For example, head-mounted wearable devices may be divided into a see-through type that provides augmented reality (AR) and a see-closed type that provides virtual reality (VR). The see-through type head mounted wearable device may be implemented in the form of glasses and may provide the user with, e.g., information, such as buildings and objects in the space within the user's field of view, in the form of images or text. The see-closed type head-mounted wearable device may output independent images to the user's eyes, respectively, and provide the user with content (games, movies, streaming, broadcasting, etc.), which is provided from a mobile communication terminal or an external input, in the form of video or sound to thereby provide an excellent sense of immersion. Further, the head-mounted wearable device may be used to provide mixed reality (MR) or extended reality (XR), which is a combination of augmented reality (AR) and virtual reality (VR).

Recently, development of products related to head-mounted wearable devices is actively progressing. Head-mounted wearable devices are used for various purposes, such as military, gaming, industrial, and medical use. Accordingly, it is required to provide good image quality while in a lighter and smaller size.

The above-described information may be provided as related art for the purpose of helping understanding of the disclosure. No assertion or determination is made as to whether any of the above-described content may be applied as prior art in relation to the disclosure.

### [Detailed Description of the Invention]

### [Technical Solution]

According to an embodiment of the disclosure, a display device may be provided. The display device may include a display configured to output light, and a lens assembly configured to guide light output from the display toward a user's eyes. The lens assembly may include at least three lenses sequentially disposed from the user's eye side to the display side along an optical axis, and a polarization assembly. The polarization assembly may include a first polarization portion, a beam splitter, and a second polarization portion disposed sequentially from the user's eye side to the display side. The at least three lenses of the lens assembly may include synthetic resin. At least one of the at least three lenses may have an Abbe's number of 40 or less and have negative refractive power. The beam splitter of the polarization assembly may include a reflective surface formed as an aspheric surface without an inflection point. The display device may satisfy the following [Formula 1]. [Formula 1] $1 < DL / EFL < 3$
(where, DL is a length of an effective pixel area of the display, and EFL is a composite focal length of the entire optical system (or the display device))

According to an embodiment of the disclosure, a wearable electronic device may be provided. The wearable electronic device may include a display configured to output light, at least three lenses sequentially disposed from the user's eye side to the display side along an optical axis, and a polarization assembly configured to reflect light output from the display at least twice between a first lens furthest from the display among the at least three lenses and a lens closest to the display among the at least three lenses. The polarization assembly may include a first polarization portion, a beam splitter, and a second polarization portion disposed sequentially from the user's eye side to the display side. The at least three lenses of the lens assembly may include synthetic resin. At least one of the at least three lenses may have an Abbe's number of 40 or less and have negative refractive power. The beam splitter of the polarization assembly may include a reflective surface formed as an aspheric surface without an inflection point. The wearable electronic device may satisfy the following [Formula 1]. [Formula 1] $1 < DL / EFL < 3$
(where, DL is a length of an effective pixel area of the display, and EFL is a composite focal length of the entire optical system)

### [Brief Description of Drawings]

The above-described aspects or other aspects, configurations and/or advantages of an embodiment of the disclosure may become clearer through the following detailed description with reference to the accompanying drawings.
FIG. 1 is a block diagram illustrating an electronic device in a network environment according to an embodiment of the disclosure.
FIG. 2 is a view illustrating a wearable electronic device according to an embodiment of the disclosure.
FIGS. 3 and 4 are views illustrating front and rear surfaces of a wearable electronic device according to an embodiment of the disclosure;
FIG. 5 illustrates a path through which light output by a display is focused or guided to a user's eye in a wearable electronic device according to an embodiment of the disclosure.
FIG. 6A is a view illustrating a wearable electronic device according to an embodiment of the disclosure.
FIG. 6B is a view illustrating an enlarged view illustrating a portion A of FIG. 6A according to an embodiment of the disclosure.
FIG. 7A is a view illustrating a wearable electronic device according to an embodiment of the disclosure.
FIG. 7B is a view illustrating an enlarged view illustrating a portion B of FIG. 7A according to an embodiment of the disclosure.
FIG. 8 illustrates a path through which light output by a display is focused or guided to a user's eye in a wearable electronic device according to an embodiment of the disclosure.
FIG. 9A is a view illustrating a wearable electronic device according to an embodiment of the disclosure.
FIG. 9B is a view illustrating an enlarged view illustrating a portion C of FIG. 9A according to an embodiment of the disclosure.
FIG. 10A is a view illustrating a wearable electronic device according to an embodiment of the disclosure.
FIG. 10B is a view illustrating an enlarged view illustrating a portion G of FIG. 10A according to an embodiment of the disclosure.

Throughout the accompanying drawings, like reference numerals may be allocated to like parts, components, and/or structures.

### [Mode for Carrying out the Invention]

A wearable electronic device implementing augmented reality, virtual reality, mixed reality, and/or extended reality may be generally used while worn on a user's head or face. For example, a display that outputs visual information may be disposed at a considerably close distance to the user's eye. When the display and the user's eye are disposed at a considerably close distance, there may be difficulty in configuring an optical system that guides or focuses visual information to the user's eye. For example, the size or number of lenses may be limited for miniaturization or weight reduction of the wearable electronic device, and it may be difficult to implement an optical system capable of providing good image quality with a limited number of lenses. In an embodiment, in a use environment where the display and the user's eyes are disposed at a considerably close distance, an optical system having a pancake lens structure may be useful for providing good image quality while using a limited number of lenses. The optical system having the pancake lens structure may implement an optical path of a sufficient length relative to a mechanical length (e.g., a total length of lenses) by reflecting visual information at least twice in a path in which visual information output by the display reaches the user's eyes. The pancake lens structure may provide good image quality while being downsized. However, refraction or scattering of light may increase due to a repeated reflection structure. For example, when refraction or scattering of light increases, degradation of image quality due to interference of refracted light or scattered light may occur.

An embodiment of the disclosure is intended to at least address the above-described problems and/or disadvantages and to at least provide advantages described below, and may provide a wearable electronic device including a lens assembly that facilitates aberration control and implements good image quality.

An embodiment of the disclosure may provide a wearable electronic device including a downsized and/or lightweight lens assembly while providing good image quality.

An embodiment of the disclosure may provide a wearable electronic device that may reduce user fatigue in a wearing state by being downsized and/or lightweight.

The technical problems to be addressed in this document are not limited to the technical problems mentioned above, and other technical problems not mentioned are clearly understood by those skilled in the art to which the disclosure belongs from the following description.

The following description of the accompanying drawings may provide an understanding of various exemplary implementations of the disclosure including the claims and their corresponding contents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and conciseness.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

It should be understood that the singular forms "a", "an", and "the" include plural meanings unless the context clearly indicates otherwise. Thus, as an example, "a component surface" may be interpreted as including one or more of the surfaces of a component.

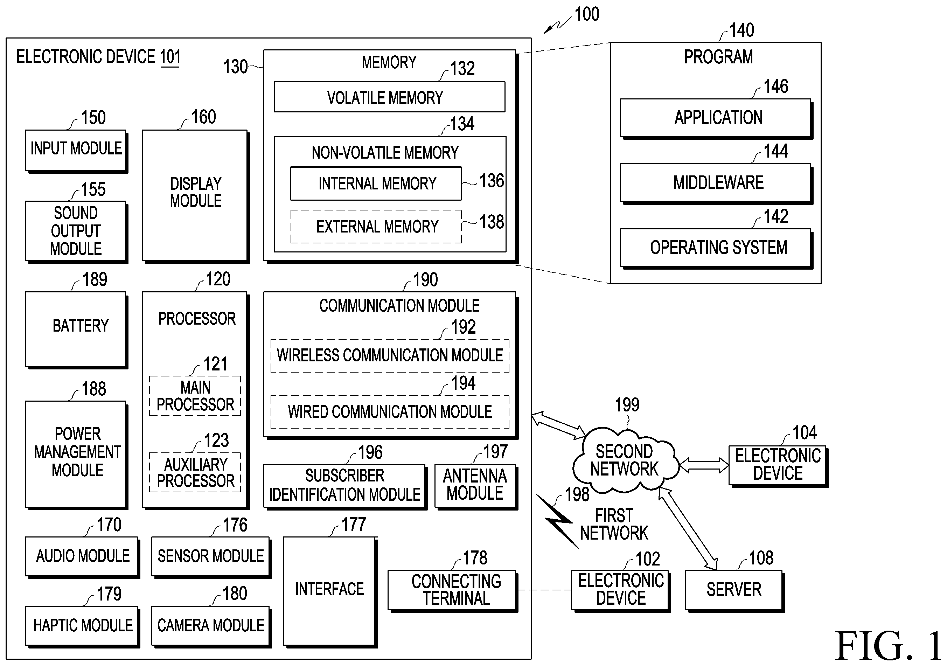

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiment(s) of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

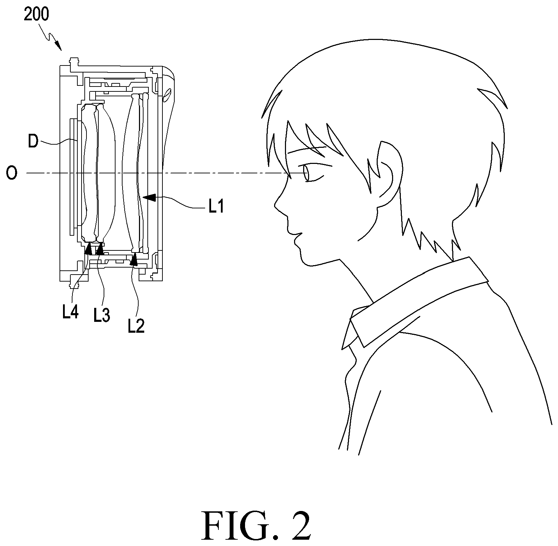

FIG. 2 is a view illustrating a wearable electronic device 200 according to an embodiment of the disclosure.

Although some numbers are presented in describing an embodiment of the disclosure, it should be noted that the numbers do not limit the embodiment of the disclosure as long as the numbers are not set forth in the claims.

Referring to FIG. 2, the wearable electronic device 200 (e.g., the electronic device 101 of FIG. 1) may be an electronic device that may be worn on the user's head or face, and the user may visually recognize the surrounding objects or environment even while wearing the wearable electronic device 200. The wearable electronic device 200 may obtain and/or recognize a visual image regarding the environment or an object in the direction in which the wearable electronic device 200 is oriented or the user views using the camera module and receive information about the object or environment from an external electronic device through a network. The wearable electronic device 200 may provide the received object- or environment-related information, in the form of an audio or visual form, to the user. For example, the wearable electronic device 200 may provide information about objects or environments received to a user in a visual form using a display member such as a display module (e.g., the display module 160 of FIG. 1). The wearable electronic device 200 implements information about objects or environments in a visual form and combines the visual form with a real image (or video) of a surrounding environment of the user, and thus the wearable electronic device 200 may implement augmented reality (AR), virtual reality (VR), mixed reality (MR), and/or extended reality (XR). The display member may output a screen in which the augmented reality object is added to the actual image (or video) of the environment around the user, thereby providing information regarding the surrounding thing or environment to the user.

According to an embodiment, all or some of operations to be executed at the electronic device 101 or wearable electronic device 200 may be executed at one or more of the external electronic devices 102, 104, or 108. For example, when the electronic device 101 or the wearable electronic device 200 should perform a predetermined function or service automatically or in response to a request from a user or another device, the electronic device 101 or the wearable electronic device 200 may request one or more external electronic devices 102, 104, or 108 to perform at least part of the function or the service, instead of or in addition to executing the function or service by itself. The one or more external electronic devices receiving the request may perform the at least part of the function or the service requested, or an additional function or an additional service related to the request, and transfer an outcome of the performing to the electronic device 101 or wearable electronic device 200. The electronic device 101 or wearable electronic device 200 may provide the outcome, with or without further processing of the outcome, as at least part of a reply to the request. For example, the external electronic device 102 renders content data executed by an application and transfers the rendered data to the electronic device 101 or the wearable electronic device 200, and the electronic device 101 or the wearable electronic device 200 that received the data may output the content data to the display module. When the electronic device 101 or the wearable electronic device 200 detects user movement through sensor(s) such as an inertial measurement unit sensor, a processor (e.g., the processor 120 of FIG. 1) of the electronic device 101 or the wearable electronic device 200 may correct rendering data received from the external electronic device 102 based on the movement information and output the corrected data to the display module. Alternatively, when detecting the user's movement through the sensor(s), the processor (e.g., the processor 120 of FIG. 1) of the electronic device 101 or wearable electronic device 200 may transfer the movement information to the external electronic device 102, requesting rendering to update the screen data. According to various embodiments, the external electronic device 102 may be various types of devices, such as a case device capable of storing and charging the electronic device 101.

In the following detailed description, the "state or position in which the electronic device or a designated component of the electronic device faces the user's face" may be mentioned in various manners and it should be noted that this presumes that the user wears the wearable electronic device 200.

According to an embodiment, the wearable electronic device 200 may include at least one display member and a wearing member. Depending on the structure of the display member, the wearable electronic device 200 may further include a structure (e.g., lens frame) for mounting or supporting the display member. A pair of display members including a first display member and a second display member may be provided and be disposed to correspond to the user's right and left eyes, respectively, while the wearable electronic device 200 is worn on the user's body. In an embodiment, the wearable electronic device 200 may have a housing shape (e.g., goggles shape) including one display member corresponding to the right eye and the left eye.

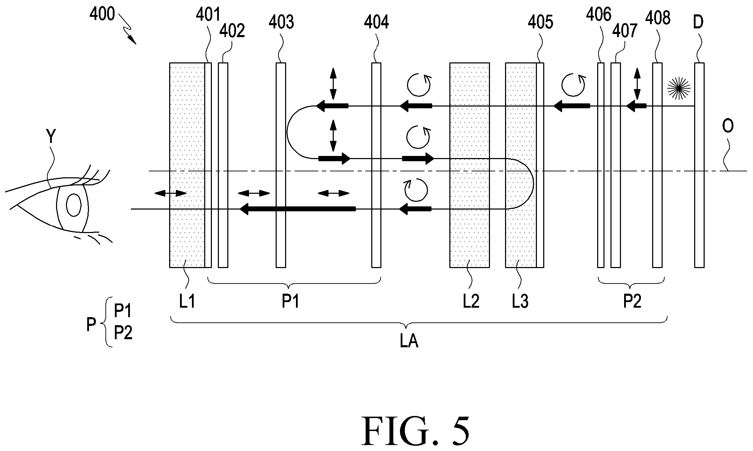

According to an embodiment, the display member is a component provided to provide visual information to the user and may include, e.g., a display D, a plurality of lenses L1, L2, L3, and L4 (e.g., a lens assembly), and/or at least one sensor. Although a total of four lenses are illustrated in FIG. 2, according to an embodiment, the display member may include three lenses L1, L2, L3 in which at least one lens (e.g., the fourth lens L4) is omitted. Here, the lens assembly and the display D each may be formed to be transparent or semi-transparent. However, the display member is not limited thereto. In an embodiment, the display member may include a window member that may be a semi-transparent glass or a member capable of adjusting its light transmittance depending on the concentration of coloring. In an embodiment, the display member may include a reflective lens or a lens including a waveguide. An image output from the light output device (e.g., a projector or display D) may form on each lens, providing the user with visual information. For example, the display member may mean a display that may include a waveguide (e.g., a light waveguide) in at least a portion of each lens and transfer the image (or light) output from the light output device, such as the display D, through the waveguide included in the display member to the user's eye while simultaneously transferring the real world through the area to the user's eye in a see-through fashion. In an embodiment, the waveguide may be understood as a portion of the lens assembly. The lens assembly (e.g., the lens assembly LA of FIGS. 5 to 10B) is a component including a plurality of lenses (e.g., L1, L2, L3), and may be disposed in a state aligned with an optical axis (e.g., the optical axis O of FIGS. 5 to 10B) in a space within the wearable electronic device 200. A configuration in which visual information output from the display D is provided to the user's eye through the lens assembly is examined again below with reference to FIG. 5.

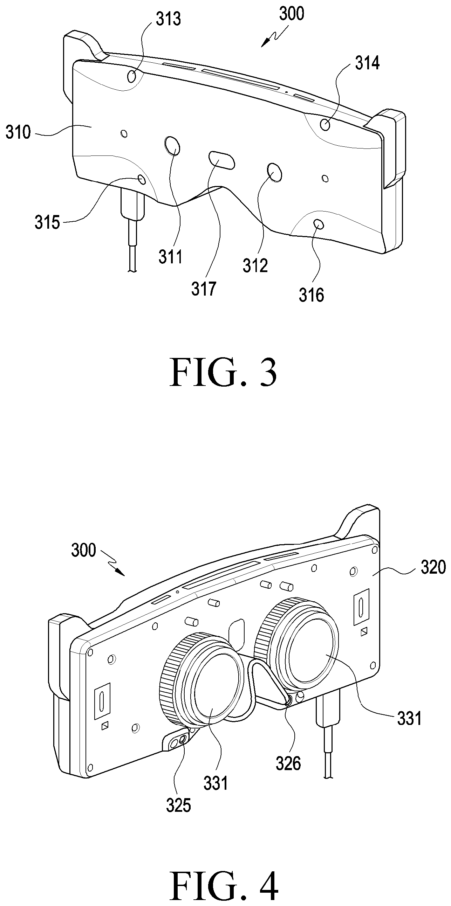

FIGS. 3 and 4 are views illustrating a front surface and a rear surface of a wearable electronic device 300 according to an embodiment.

Referring to FIGS. 3 and 4, in an embodiment, camera modules 311, 312, 313, 314, 315, 316 and/or a depth sensor 317 for acquiring information related to a surrounding environment of the wearable electronic device 300 may be disposed on a first surface 310 of the electronic device 300 (e.g., a housing).

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, 316 may be used for hand detection, tracking, and recognition of a user's gesture (e.g., a hand motion). The camera modules 313, 314, 315, and 316 may be used for 3 degrees of freedom (DoF) or 6DoF head tracking, location (space or environment) recognition, and/or movement recognition. In an embodiment, the camera modules 311 and 312 may be used for hand detection and tracking or recognition or detection of the user's gesture.

In an embodiment, the depth sensor 317 may be configured to transmit a signal and receive a signal reflected from an object and be used for identifying the distance to the object, such as time of flight (TOF). Alternatively or additionally to the depth sensor 317, the camera modules 313, 314, 315, 316 may identify a distance to an object.

According to an embodiment, a face recognition camera module 325, 326 and/or a display 331 (and/or a lens) may be disposed on a second surface 320 of the housing.

In an embodiment, the face recognition camera modules 325 and 326 adjacent to the display may be used for recognizing the user's face or may recognize and/or track both eyes of the user.

In an embodiment, the display 331 (and/or lens) may be disposed on the second surface 320 of the wearable electronic device 300. In an embodiment, the display 331 (and/or the lens) may be at least partially similar to or substantially the same as the display D (and/or the lenses L1, L2, L3, L4) of FIG. 2. In an embodiment, the wearable electronic device 300 may not include the camera modules 315 and 316 among the plurality of camera modules 313, 314, 315, and 316. Although not illustrated in FIGS. 3 and 4, the wearable electronic device 300 may further include at least one of the configurations illustrated in FIGS. 1 and/or 2.

In an embodiment, the display 331 may be understood as including a display module (e.g., the display module 160 of FIG. 1) that outputs a screen, and a lens assembly (e.g., the lens assembly LA of FIGS. 5 to 10B) that focuses the output screen to the user's eyes. It is noted that in FIG. 4, a reference number is allocated to a portion visible from an exterior of the wearable electronic device 300 and is indicated on a lens closest to the user's eyes among the display 331 (and/or the lens).

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide a user experience based on augmented reality, virtual reality, and/or mixed reality while worn on the user's head.

FIG. 5 illustrates a path through which light output by the display D is focused or guided to the user's eyes Y in a wearable electronic device 400 according to an embodiment of the disclosure.

Referring further to FIG. 5 together with FIG. 2, the wearable electronic device 400 according to an embodiment of the disclosure may include a display D and a lens assembly LA configured to refract, transmit, and/or reflect light output from the display D to transfer the light to the user's eyes Y. In the disclosure, the display D and the lens assembly LA may be collectively referred to as a "display device."

According to an embodiment, the lens assembly LA may include a plurality of (e.g., at least three) lenses L1, L2, L3, and a polarization assembly P including a first polarization portion P1 and a second polarization portion P2. According to an embodiment, the lenses L1, L2, L3, the first polarization portion P1, and/or the second polarization portion P2 may be aligned along an optical axis O in a straight line form extending between the display D and the user's eyes Y (indicated by a dashed line O in FIGS. 5, 6A, 7A, 8, 9A, and 10A). According to an embodiment, the polarization assembly P (e.g., the first polarization portion P1 and the second polarization portion P2) may include at least one quarter wave plate (QWP) 404, 407, at least one reflective polarizer (RP) 403, at least one polarizer (POL) 402, 408, and/or at least one beam splitter 405. According to an embodiment, the lens assembly LA may further include at least one anti-reflection (AR) layer 401, 406. According to an embodiment, at least one of the plurality of lenses L1, L2, L3 is movable, and a diopter may be adjusted to provide a vision correction function to the user.

According to an embodiment, the polarization assembly P (e.g., the first polarization portion P1 and the second polarization portion P2) may be disposed between a first lens L1 (hereinafter, referred to as a "first lens L1") among the lenses L1, L2, L3 of the lens assembly LA from the user's eyes Y and the display D. For example, according to an embodiment in which the polarization assembly P is disposed further from the user's eyes Y than the first lens L1, damage to the polarization assembly P that occurs during manufacturing or use may be decreased or prevented compared to a case in which at least part of the polarization assembly P is disposed closer to the user's eyes Y than the first lens L1.

According to an embodiment, the at least one quarter wave plate 404, 407, the at least one reflective polarizer 403, and the at least one beam splitter 405 included in the polarization assembly P (e.g., the first polarization portion P1 and/or the second polarization portion P2) may extend and/or adjust a light traveling path length between the user's eyes Y and the display D. For example, by implementing a focal length longer than a mechanical or physical length of the lens assembly LA, quality of an image provided to the user may be enhanced. A wearable electronic device (e.g., AR/VR glasses) is limited in size or weight due to an actual use environment (e.g., use in a wearing state), and therefore a resolution of an output virtual image may be limited, and it may be difficult to provide an image of good quality to the user even through an optical system. According to an embodiment, the wearable electronic device 400 includes an optical system (e.g., the lens assembly LA) having a pancake lens structure, and thus an optical path length of an incident light ray may be extended relative to an external size, and/or an image resolution provided to the user may be increased. For example, the wearable electronic device 400 includes the display D and the lens assembly LA, and may be an optical device (e.g., AR/VR glasses) that provides visual information to the user while being worn on the user's head or face.

According to an embodiment, the display D may include a screen display area that exposes visual information to portions corresponding to both eyes of a user when the user wears the wearable electronic device 400. In an embodiment, the wearable electronic device 400 may include a pair of displays D corresponding to both eyes of the user. The display D may include, e.g., a liquid crystal display (LCD), a light emitting diode (LED) display, an organic light emitting diode (OLED) display, a micro electro mechanical system (MEMS) display, or an electronic paper display. The display D may display, e.g., various contents (e.g., text, images, videos, icons, or symbols) provided as visual information to a user.

According to an embodiment, various contents (e.g., text, an image, a video, an icon, or a symbol) output in the form of light from the display D may pass through the at least one quarter wave plate 404, 407, the at least one reflective polarizer 403, the at least one beam splitter 405, and/or the plurality of lenses L1, L2, L3 and be provided to the user's eyes. An order in which light passes through the at least one quarter wave plate 404, 407, the at least one reflective polarizer 403, the at least one beam splitter 405, and/or the plurality of lenses L1, L2, L3 may be variously set according to an embodiment.

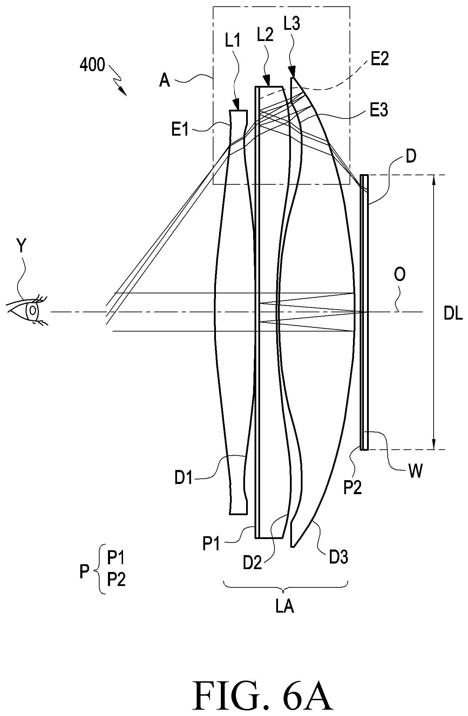

According to an embodiment, the wearable electronic device 400 may further include a cover window (e.g., the cover window W of FIGS. 6A, 7A, 9A, and 10A) disposed on the user's eye side surface of the display D. According to an embodiment, light output from the display D may pass through the cover window (e.g., the cover window W of FIGS. 6A, 7A, 9A, and 10A) and be transferred to the lens assembly LA. In the disclosure, "disposed on XX" may refer to being disposed adjacent to or in substantial contact with XX.

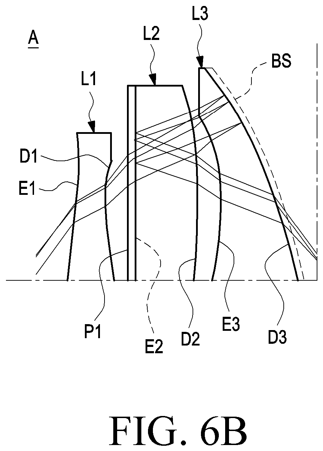

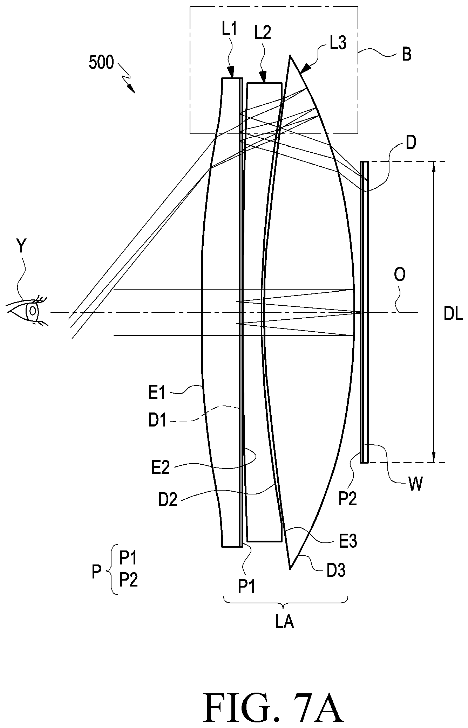

According to an embodiment, the first polarization portion P1 may be configured to selectively transmit, reflect, and/or block light output from the display D and transferred through the remaining lenses L2, L3 other than the first lens L1, the beam splitter 405, and the second polarization portion P2, and transfer the light to the first lens L1. According to an embodiment, the first polarization portion P1 may be disposed between the first lens L1 furthest from the display D and the second lens L2 second furthest from the display D. According to an embodiment (e.g., see FIGS. 6A and 6B), the first polarization portion P1 may be disposed on the subject side surface E2 of the second lens L2. According to an embodiment (e.g., see FIGS. 7A to 10B), the first polarization portion P1 may be disposed on the display side surface D1 of the first lens L1.

In an embodiment, the first polarization portion P1 may include a first anti-reflection layer 401, a first polarizer 402, a reflective polarizer 403, and/or a first quarter wave plate 404. For example, the first anti-reflection layer 401, the first polarizer 402, the reflective polarizer 403, and/or the first quarter wave plate 404 may be formed in a film form. In an embodiment, the first anti-reflection layer 401, the first polarizer 402, the reflective polarizer 403, and/or the first quarter wave plate 404 of the first polarization portion P1 may be combined with each other, or may be formed by being spaced apart from each other with an air layer (or an air gap), another polarization layer, and/or a dummy layer therebetween. Here, the air layer, an adhesive layer, another polarization layer, and/or a dummy layer may have substantially no refractive power. Here, e.g., "any two members among the first anti-reflection layer 401, the first polarizer 402, the reflective polarizer 403, and/or the first quarter wave plate 404 are spaced apart from each other with an adhesive layer, another polarization layer, or a dummy layer therebetween" may include referring to a structure in which the any two members are laminated. Here, "lamination" may refer to two different members being bonded together by an adhesive provided on at least one of them. For example, when the first anti-reflection layer 401 and the first polarizer 402 are laminated, the first anti-reflection layer 401 and the first polarizer 402 may be bonded to each other by an adhesive layer disposed therebetween, and in this case, the first anti-reflection layer 401, another polarization layer (and/or a dummy layer), and the first polarizer 402 may be stacked on each other with another polarization layer (and/or a dummy layer) therebetween, and may be bonded to each other by the adhesive layer. For example, the first polarization portion P1 in the form in which the first anti-reflection layer 401, the first polarizer 402, the reflective polarizer 403, and/or the first quarter wave plate 404 are laminated may be thinner and have better optical performance than a simply stacked film-type polarization member. According to an embodiment, part of the first polarization portion P1 (e.g., the first anti-reflection layer 401) may be omitted.

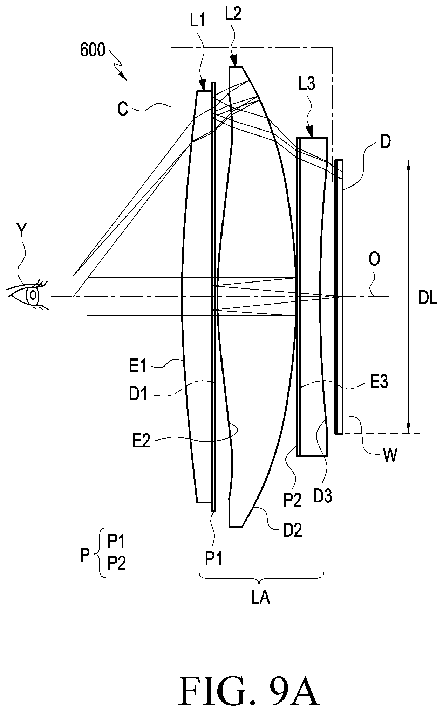

In an embodiment, the beam splitter 405 may be configured to transmit part of light incident thereon and reflect another part of the incident light. For example, the beam splitter 405 may be configured to transmit about 50% of light and reflect about 50% of light. In an embodiment, the beam splitter 405 may be configured as a semi-transparent mirror, and may be configured as, e.g., a mirror form coated on one surface of the second lens L2 (e.g., the display side surface D2 of the second lens L2 of FIGS. 9A to 10B) or one surface of the third lens L3 (e.g., the display side surface D3 of the third lens L3 of FIGS. 6A to 7B).

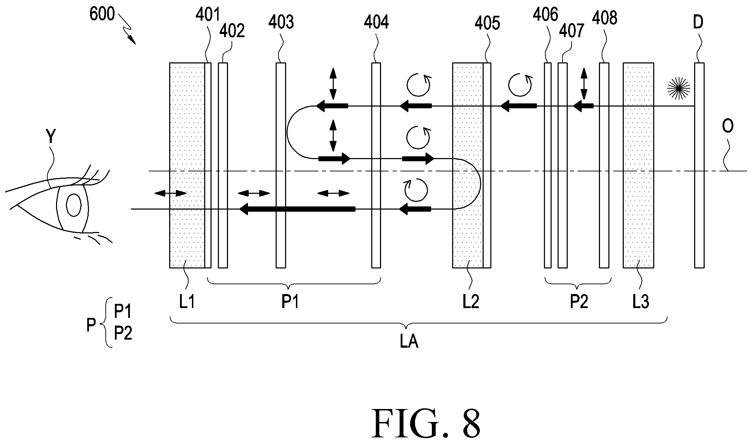

According to an embodiment (e.g., see FIGS. 5 to 7B), the beam splitter 405 (e.g., the beam splitter BS of FIGS. 5 to 7B) may be disposed on either one of two surfaces of a third lens L3 (hereinafter, referred to as a "third lens L3") from the user's eyes Y among the lens assembly LA. In the disclosure, "disposed on XX" may refer to being disposed adjacent to or in substantial contact with XX. In the disclosure, "two surfaces" of an arbitrary lens may refer to the user's eye Y side surface and the display D side surface of the arbitrary lens. According to an embodiment, the beam splitter 405 may be disposed adjacent to (or in substantial contact with) the display side surface of the third lens L3 (or may be disposed on the display side surface). However, a position of the beam splitter 405 may be changed in the disclosure, and according to an embodiment (e.g., see FIGS. 8 to 10B), the beam splitter 405 may be disposed on either one of two surfaces (e.g., the display side surface) of a second lens L2 (hereinafter, referred to as a "second lens L2") from the user's eyes Y among the lens assembly LA.

According to an embodiment, the second polarization portion P2 is disposed closer to the display D than the first polarization portion P1, and may be configured to selectively transmit and/or block light output from the display D and transfer the light to the lenses L1, L2, and/or L3, the beam splitter 405, and the first polarization portion P1.

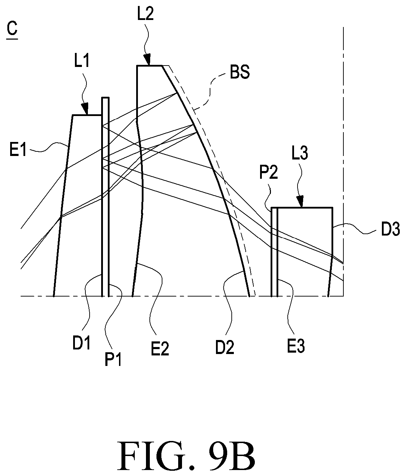

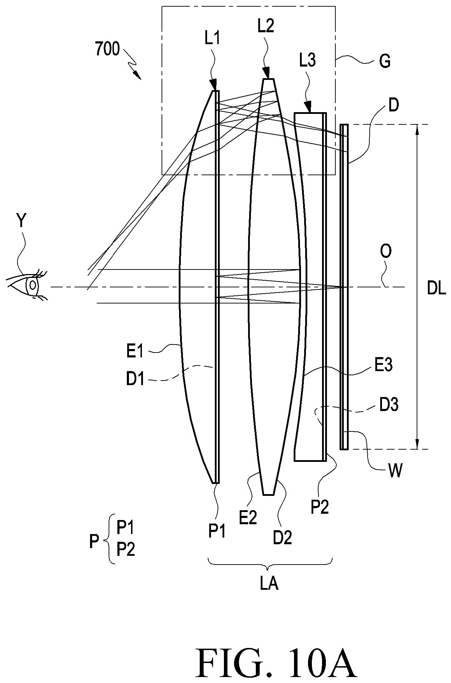

In an embodiment (e.g., see FIGS. 5 to 7B), the second polarization portion P2 may be disposed between the lens assembly LA (e.g., the third lens L3) and the display D. According to an embodiment (e.g., see FIGS. 5 to 7B), the second polarization portion P2 may be disposed on the cover window W disposed on the user's eye side surface of the display D. According to an embodiment (e.g., see FIGS. 8, 9A, and 9B), the second polarization portion P2 may be disposed between the third lens L3 closest to the display D and the second lens L2 second closest to the display D. According to an embodiment (e.g., see FIGS. 9A and 10A), the second polarization portion P2 may be disposed on the display side surface (e.g., see FIG. 10A) or the user's eye side surface (e.g., see FIG. 9A) of the third lens L3 closest to the display D. According to an embodiment, the surface (e.g., the display side surface or the user's eye side surface) of the lens (e.g., the third lens L3) to which the first polarization portion P1 is attached may be implemented as a substantially flat surface.

In an embodiment, the second polarization portion P2 may include a second anti-reflection layer 406, a second polarizer 408, and/or a second quarter wave plate 407. For example, the second anti-reflection layer 406, the second polarizer 408, and/or the second quarter wave plate 407 may be formed in a film form. In an embodiment, the second anti-reflection layer 406, the second polarizer 408, and/or the second quarter wave plate 407 of the second polarization portion P2 may be combined with each other, or may be formed by being disposed with an air layer (or an air gap), another polarization layer, and/or a dummy layer therebetween. Here, the air layer, an adhesive layer, another polarization layer, and/or a dummy layer may have substantially no refractive power. Here, e.g., "any two members among the second anti-reflection layer 406, the second polarizer 408, and/or the second quarter wave plate 407 are spaced apart from each other with an adhesive layer, another polarization layer, or a dummy layer therebetween" may refer to a structure in which the two members are laminated. According to an embodiment, here, "lamination" may mean that an adhesive is provided on at least one of two different members and the members are bonded to each other. For example, when the second anti-reflection layer 406 and the second polarizer 408 are laminated, the second anti-reflection layer 406 and the second polarizer 408 may be bonded to each other by an adhesive layer disposed therebetween, and in this case, the second anti-reflection layer 406, another polarization layer (and/or a dummy layer), and the second polarizer 408 may be stacked on each other with another polarization layer (and/or a dummy layer) therebetween, and may be bonded to each other by the adhesive layer. For example, the second polarization portion P2 in the form in which the second anti-reflection layer 406, the second polarizer 408, and/or the second quarter wave plate 407 are laminated may be thinner and have better optical performance than a simply stacked film-type polarization member. According to an embodiment, part of the second polarization portion P2 (e.g., the second anti-reflection layer 406) may be omitted.

In the illustrated embodiment, the first lens L1 of the wearable electronic device 400 or the lens assembly LA may be understood as a lens disposed furthest from the display D among the plurality of (e.g., at least three) lenses, or a lens disposed closest to the user's eyes Y. However, it is noted that the embodiment(s) of the disclosure is/are not limited thereto. For example, although not illustrated, the wearable electronic device 400 or the lens assembly LA may further include a transmissive optical member disposed further from the display D than the first lens L1. In an embodiment, the transmissive optical member may have refractive power to an extent that does not affect optical performance of the wearable electronic device 400, 500, 600, 700 of FIGS. 5, 6A, 7A, 8, 9A, and 10A and/or the lens assembly LA of FIGS. 5, 6A, 7A, 8, 9A, and 10A. In an embodiment, the transmissive optical member disposed further from the display D than the first lens L1 may have a transmittance of about 90% or more for visible light. In an embodiment, the transmissive optical member may have a transmittance close to 100% for visible light.

According to an embodiment, a liquid crystal display, an organic light emitting diode display, and/or a micro LED may include a polarizing plate, and thus may provide an image of good quality. In an embodiment, when the lens assembly LA further includes the first polarization portion P1, image quality perceived by the user may be enhanced even when the display D outputs an image of the same quality. In an embodiment, when combined with the lens assembly LA including the first polarization portion P1 and the second polarization portion P2, some polarizing plates may be omitted in the display D implemented as an organic light emitting diode display or a micro LED.

In the following description, a direction from the user's eyes Y toward the display D may be referred to as a first direction, and a direction opposite to the first direction from the display D toward the user's eyes Y may be referred to as a second direction. The first direction and the second direction may be substantially parallel to the optical axis O. The lens assembly LA may include a plurality of lenses (e.g., the first lens L1, the second lens L2, and the third lens L3) sequentially disposed along the first direction.

According to an embodiment, arrangement of the polarization portions P1, P2 and/or the beam splitter 405 of the polarization assembly P described above may provide an image of good quality while miniaturizing an optical system implemented with a limited number (e.g., at least three) of lenses L1, L2, L3. According to an embodiment, a polarization axis of the first polarizer 402 of the first polarization portion P1 and a polarization axis of the second polarizer 408 of the second polarization portion P2 may form 90 degrees. A fast axis of the first quarter wave plate 404 of the first polarization portion P1 and a fast axis of the second quarter wave plate 407 of the second polarization portion P2 may form 90 degrees. In the following description, reference to the anti-reflection members 401, 406 may be omitted.

Referring to FIG. 5, according to an embodiment, the wearable electronic device 400 may operate as follows. Light output from the display D may pass through the at least three lenses L1, L2, L3, the second polarization portion P2, the beam splitter BS, and the first polarization portion P1 of the lens assembly LA, and then reach the user's eyes Y. In this case, the second polarizer 408 of the second polarization portion P2 transmits a first linear polarization, e.g., vertical polarization (or p-polarization), and may not transmit a second linear polarization, e.g., horizontal polarization (or s-polarization). For example, Among light reaching the second polarizer 408, only vertical polarization (or p-polarization) may be transmitted. Light transmitted through the second polarizer 408 is converted into circular polarization (right circular polarization or left circular polarization) by the second quarter wave plate 407, and the circular polarization may sequentially pass through the beam splitter 405, the third lens L3, and the second lens L2, and then reach the first quarter wave plate 404. The circularly polarized light reaching the first quarter wave plate 404 may be converted back into the linearly polarized light (e.g., vertically polarized light (or p polarized light)) while passing through the first quarter wave plate 404 and reach the reflective polarizer 403. Until reaching the reflective polarizer 403, the light may move toward the second direction (the display D → the user's eyes Y). The light reaching the reflective polarizer 403 is reflected by the reflective polarizer 403 and directed toward the first direction (the user's eyes Y → the display D), and may be converted into circular polarization (right circular polarization or left circular polarization) while transmitting through the first quarter wave plate 404 again. The circularly polarized light (right-circularly polarized light or left-circularly polarized light) may be reflected by the beam splitter 405 in the second direction and, at this time, the phase may be shifted (e.g., from left-circularly polarized light to right-circularly polarized light, or from right-circularly polarized light to left-circularly polarized light). The circular polarization with the converted phase may pass through the first quarter wave plate 404 and the reflective polarizer 403 along the second direction and reach the user's eyes Y. In this case, light transmitted through the first quarter wave plate 404 may be converted into horizontal polarization (or s-polarization) and reach the user's eyes Y. However, the embodiment of FIG. 5 illustratively describes a state change of light passing through the wearable electronic device 400 according to an embodiment, and it is noted that conversion of polarization components by the reflective polarizer 403, the quarter wave plates 404, 407, the beam splitter 405, and/or the second polarizer 408 may differ from the described embodiment.

FIG. 6A is a view illustrating a wearable electronic device 400 (e.g., the electronic device 101 of FIG. 1 or the wearable electronic device 200, 300, 400 of FIGS. 2 to 5) according to an embodiment of the disclosure. FIG. 6B is a view illustrating an enlarged view illustrating a portion A of FIG. 6A according to an embodiment of the disclosure.

The lens assembly LA and the display D of FIG. 6A may be referred to as the lens assembly LA and the display D of FIG. 5, and descriptions overlapping those described above with reference to FIG. 5 may be omitted below.

Referring to FIGS. 6A and 6B, the wearable electronic device 400 may include a display D and a lens assembly LA, and visual information output from the display D may be focused or guided by the lens assembly LA and provided to the user's eyes Y. The lens assembly LA may include a plurality of, e.g., at least three lenses L1, L2, L3 (e.g., the lenses L1, L2, L3 of FIG. 5) sequentially disposed along the optical axis O direction. For convenience of description, or as described above, the plurality of lenses L1, L2, L3 may be distinguished and described by appending ordinals such as "first" or "second" according to an order disposed in a direction from the user's eyes Y toward the display D. In reference numbers of the drawings, "Ln" indicates the nth lens, "En" indicates the user's eye side surface of the nth lens, and "Dn" may indicate the display side surface of the nth lens.

According to an embodiment, the lens assembly LA of the wearable electronic device 400 may include the first polarization portion P1, the beam splitter BS, and the second polarization portion P2 sequentially disposed from the user's eye Y side to the display D side. According to an embodiment, the first polarization portion P1 (e.g., the first polarization portion P1 of FIG. 5) of the polarization assembly P may be disposed on, e.g., the user's eye side surface E2 of the second lens L2. The second polarization portion P2 (e.g., the second polarization portion P2 of FIG. 5) of the polarization assembly P may be disposed on the cover window W. Referring to FIG. 6B, the beam splitter BS (e.g., the beam splitter 405 of FIG. 5) may be disposed between the first polarization portion P1 and the second polarization portion P2, e.g., on the display side surface D3 of the third lens L3. In an embodiment, when the first polarization portion P1 is substantially attached to a surface of any one of the lenses L1, L2, L3, the corresponding lens surface (e.g., the user's eye side surface E2 of the second lens L2) may be substantially a plane.

As described with reference to FIG. 5, light or visual information output from the display D may sequentially transmit through the second polarization portion P2 and the beam splitter BS, and then be sequentially reflected by the first polarization portion P1 and the beam splitter BS. Light or visual information reflected by the beam splitter BS may transmit through the first polarization portion P1 and be provided to the user. For example, at least part of light or visual information output from the display D may transmit through the second polarization portion P2 and the beam splitter BS and reach the first polarization portion P1. The first polarization portion P1 at least partially reflects incident light (e.g., light transmitted through the second polarization portion P2 and the beam splitter BS), and the beam splitter BS may reflect at least part of the light reflected by the first polarization portion P1 again and guide the light to the user's eyes Y. Accordingly, visual information output from the display D may be reflected at least twice in a path reaching the user's eyes Y. Although the lenses L1, L2, L3 are not mentioned in describing the traveling path of light passing through the polarization portions P1, P2 and/or the beam splitter BS, visual information output from the display D may be focused by the lenses L1, L2, L3 in a path reaching the user's eyes Y.

According to an embodiment, a "polarization portion" may be referred to as a polarization portion, a polarization member, a polarization film, a polarization sheet, a polarization layer, a modulation member, a modulation film, and/or a modulation sheet. Here, "modulation" may refer to filtering, reflecting, refracting, modulating a phase, and/or retarding a phase of at least part of incident light. In an embodiment, a modulation tendency of the polarization portion may vary according to a wavelength of incident light or a polarization component of incident light. Such a polarization portion may be implemented by a film, a sheet, a coating material, and/or a deposition material.

In an embodiment, the second polarization portion P2 may include a second polarizer (e.g., the second polarizer 408 of FIG. 5) and a second quarter wave plate (e.g., the second quarter wave plate 407 of FIG. 5) disposed facing the second polarizer 408. In disposing the second polarizer 408 and the second quarter wave plate 407, a polarization axis linearly polarized by the second polarizer 408 and a fast axis of the second quarter wave plate 407 may form a 45-degree angle. For example, the second polarization portion P2 may be configured to convert linearly polarized light into circular polarization. In an embodiment, when the first polarization portion P1 includes the first polarizer 402, a polarization axis of the first polarizer 402 and a polarization axis of the second polarizer 408 may form a 90-degree angle. In an embodiment, a fast axis of the first quarter wave plate 404 and a fast axis of the second quarter wave plate 407 may form a 90-degree angle.

According to an embodiment, the beam splitter BS may be provided on one surface (e.g., the display side surface D3 of the third lens L3) of a lens closest to the display D. According to an embodiment, the lens surface (e.g., the display side surface D3 of the third lens L3) on which the beam splitter BS is disposed may be formed as an aspheric surface without an inflection point, and thus a wide field of view may be secured while preventing degradation of optical performance due to abrupt change (e.g., reflection) of the light path. For example, the beam splitter BS may be stacked or formed on the display side surface D3 of the third lens L3 by substantially depositing or coating an optical material.

In an embodiment, by including the first polarization portion P1 and the beam splitter BS functioning as reflective members, an optical length of the lens assembly LA may become larger than a mechanical (or physical) length, and a number of lenses (or lens surfaces) disposed between the first polarization portion P1 and the beam splitter BS may be minimized. For example, in a downsized lens assembly LA structure, an optical length may be sufficiently secured by the reflective members (e.g., the first polarization portion P1 and the beam splitter BS), and by reducing the number of lenses or lens surfaces disposed between the reflective members (e.g., the first polarization portion P1 and the beam splitter BS), an increase in refraction or scattering may be suppressed and the lens assembly LA may provide an image of enhanced quality. In an embodiment, the above-mentioned "refraction or scattering" may refer to birefringence caused by manufacturing tolerances or errors generated during an assembly process within an allowed range. For example, by reducing the number of lenses or lens surfaces disposed between the reflective members (e.g., the first polarization portion P1 and the beam splitter BS), birefringence of the lenses may be suppressed, and the lens assembly LA may provide an image of enhanced quality.

According to an embodiment, the entire display device including the lens assembly LA and the display D of the wearable electronic device 400, 500, 600, 700 of FIGS. 5 to 6B described above and FIGS. 7A to 10D described below may provide good wide-angle or ultra-wide-angle performance by having a field of view (FOV) equal to or greater than about 100, and may have lens characteristics described below. In an embodiment, the user's eye side surface E1 of the first lens L1 may be formed to be convex toward the user's eyes Y, and thus a thickness (e.g., a thickness in the optical axis O direction) of a structure (e.g., a lens barrel) for fixing the first lens L1 may be decreased, which may contribute to thickness reduction or thinning of the entire display device including the lens assembly LA and the display D. In an embodiment, in the lenses L1, L2, L3, surfaces to which the polarization portions P1, P2 are attached may be substantially flat. According to an embodiment, in a structure in which the polarization portions P1, P2 and/or the beam splitter BS as described above are disposed, one of the at least three lenses L1, L2, L3 may have an Abbe's number of about 40 or less. According to an embodiment, one of the three lenses L1, L2, L3 may have an Abbe's number of about 40 or less and have negative refractive power, and the remaining two lenses may have positive refractive power. When one of the at least three lenses L1, L2, L3 is designed to have an Abbe's number of about 40 or less and have negative refractive power, chromatic aberration control performance and optical performance of the lens assembly LA of the wearable electronic device 400 may be enhanced.

According to an embodiment, the entire display device including the lens assembly LA and the display D of the wearable electronic device 400, 500, 600, 700 of FIGS. 5 to 6B described above and FIGS. 7A to 10D described below may satisfy a condition presented through the following [Formula 1]. [Formula 1] $1 < DL / EFL < 3$

Here, DL is the length of the effective pixel area of the display D, and EFL may be a composite focal length of the entire optical system. In the disclosure, "a focal length of the entire optical system" may refer to a composite focal length including the display D and the lens assembly LA (or a composite focal length of the entire display device). For example, if a calculated value of [Formula 1] is less than about 1, a display field of view may become small, making it difficult to provide good wide-angle or ultra-wide-angle performance, and product competitiveness of the wearable electronic device may be weakened. For example, if a calculated value of [Formula 1] is greater than about 3, the field of view may become larger than a designed value, and optical performance of the display device may be degraded compared to designed performance.

According to an embodiment, the display D and the lens assembly LA (or the display device) may have a field of view of about 108.00 degrees and a focal length (EFL) of about 15.12 mm, and may have an F-number (or Fno) of about 3.82. In an embodiment, the length DL of the effective pixel area of the display D may be about 24.72 mm, and the DL/EFL value may be about 1.63, which may satisfy [Formula 1] described above.

In an embodiment, the lens assembly LA (e.g., the electronic device 400) may be manufactured with specifications presented in [Table 1], and may have aspheric coefficients of [Tables 2] and [Table 3]. The definition of an aspheric surface may be calculated through the following [Formula 2]. In [Table 1], "REF." illustrates reference numbers allocated to the lenses L1, L2, L3 and/or the polarization portions P1, P2 of FIGS. 6A and 6B, and "lens surface (surface)" describes ordinals allocated to lens surfaces or surfaces of the polarization portions that transmit (or reflect) visual information, and the ordinals may be sequentially allocated along a direction opposite to a light path from the display D to the user's eyes Y. The "Display window" (e.g., the cover window W of FIG. 6) in [Table 1] may be a display protection plate that is a substantially transparent plate.

The aspheric coefficients of [Table 2] or [Table 3] and tables described below may be calculated from [Formula 2] below. [Formula 2] $z = \frac{c ′ {y}^{2}}{1 + \sqrt{1 - \left(k+1\right) c {′}^{2} {y}^{2}}} + {Ay}^{4} + {By}^{6} + {Cy}^{8} + {Dy}^{10} + {Ey}^{12} + {Fy}^{14} + {Gy}^{16} + {Hy}^{18} + {Jy}^{20} + {Ky}^{22} + {Ly}^{24} + {My}^{26} + {Ny}^{28} + {Oy}^{30}$

In [Formula 2], "z" is a distance in the optical axis O direction from a point where the optical axis O passes through on the lens surface, "y" is a distance in a direction perpendicular to the optical axis O from the optical axis O, "c" is an inverse of a radius of curvature at a vertex of the lens, "k" is a conic constant, and "A," "B," "C," "D," "E," "F," "G," "H," "J," "K," "L," "M," "N," "O" may each mean an aspheric coefficient. The "inverse of the radius of curvature" may represent a value (e.g., curvature) indicating a degree of curvature at each point of a curved surface or a curve. Among the aspheric coefficient(s) of [Formula 2], an aspheric coefficient whose value is 0 (zero) may be omitted in [Table 2] or [Table 3] described below.

**[Table 1]**

| REF. | lens surface (surface) | radius of curvature (radius) | Thicknes s (Thick) | material | Refractiv e index (nd) | Abbe number (vd) | Refractive mode |
|---|---|---|---|---|---|---|---|
| | User's eye (EYE) | infinity | infinity | | | | refraction |
| | aperture stop (STOP) | infinity | 10.000 | | | | refraction |
| L1 | 2 | 60.539 | 4.042 | OPTIM AS7500 | 1.497 | 57.39 | refraction |
| | 3 | -1399.72 7 | 0.123 | | | | refraction |
| P1 | 4 | infinity | 0.252 | FILM | 1.495 | 57.47 | refraction |
| L2 | 6 | infinity | 1.864 | SP3810 | 1.649 | 23.25 | refraction |
| | 7 | 151.940 | 0.130 | | | | refraction |
| L3 | 8 | 65.617 | 7.620 | OPTIM AS7500 | 1.497 | 57.39 | refraction |
| | 9 | -53.853 | -7.620 | OPTIM AS7500 | -1.497 | 57.39 | reflection |
| L2 | 10 | 65.617 | -0.130 | | | | refraction |
| | 11 | 151.940 | -1.864 | SP3810 | -1.649 | 23.25 | refraction |
| polarizati on film | 12 | infinity | -0.134 | FILM | -1.495 | 57.47 | refraction |
| polarizati on film | 13 | infinity | 0.134 | FILM | 1.495 | 57.47 | reflection |
| L2 | 14 | infinity | 1.864 | SP3810 | 1.649 | 23.25 | refraction |
| | 15 | 151.940 | 0.130 | | | | refraction |
| L3 | 16 | 65.617 | 7.620 | OPTIM AS7500 | 1.497 | 57.39 | refraction |
| | 17 | -53.853 | 0.587 | | | | refraction |
| P2 | 18 | infinity | 0.242 | FILM | 1.495 | 57.47 | refraction |
| Display window | 19 | infinity | 0.500 | BSC7_H OYA | 1.520 | 64.2 | refraction |
| | 20 | infinity | 0.010 | | | | refraction |
| | display | infinity | 0.000 | | | | |

**Table 2**

| Surf | 2 | 3 | 7 | 8 | 9 |
|---|---|---|---|---|---|
| radius of curvature (Radius) | 6.05E+01 | -1.40E+03 | 1.52E+02 | 6.56E+01 | -5.39E+01 |
| k(conic) | 8.50E+00 | -9.90E+01 | -8.89E+01 | -6.35E+00 | -8.39E+00 |
| A(4th)/C4 | -2.11E-05 | -1.27E-05 | 5.79E-05 | 8.65E-05 | -2.74E-06 |
| B(6th)/C5 | 4.51E-08 | -1.74E-07 | -2.54E-07 | -6.56E-07 | -5.81E-09 |
| D(10th)/C7 | 9.80E-13 | 7.23E-12 | 2.56E-12 | -6.34E-12 | -5.18E-13 |
| E(12th)/C8 | -1.80E-15 | -5.23E-14 | -5.31E-15 | 9.39E-15 | 1.00E-15 |
| F(14th)/C9 | 0.00E+00 | 1.25E-16 | 3.46E-18 | -5.88E-18 | -6.69E-19 |
| G(16th)/C10 | 0.00E+00 | -1.01E-19 | 0.00E+00 | 0.00E+00 | 0.00E+00 |

**[Table 3]**

| Surf | 10 | 11 | 15 | 16 | 17 |
|---|---|---|---|---|---|
| radius of curvature (Radius) | 6.56E+01 | 1.52E+02 | 1.52E+02 | 6.56E+01 | -5.39E+01 |
| k(conic) | -6.35E+00 | -8.89E+01 | -8.89E+01 | -6.35E+00 | -8.39E+00 |
| A(4th)/C4 | 8.65E-05 | 5.79E-05 | 5.79E-05 | 8.65E-05 | -2.74E-06 |
| B(6th)/C5 | -6.56E-07 | -2.54E-07 | -2.54E-07 | -6.56E-07 | -5.81E-09 |
| D(10th)/C7 | -6.34E-12 | 2.56E-12 | 2.56E-12 | -6.34E-12 | -5.18E-13 |
| E(12th)/C8 | 9.39E-15 | -5.31E-15 | -5.31E-15 | 9.39E-15 | 1.00E-15 |
| F(14th)/C9 | -5.88E-18 | 3.46E-18 | 3.46E-18 | -5.88E-18 | -6.69E-19 |
| G(16th)/C10 | 0.00E+00 | 0.00E+00 | 0.00E+00 | 0.00E+00 | 0.00E+00 |

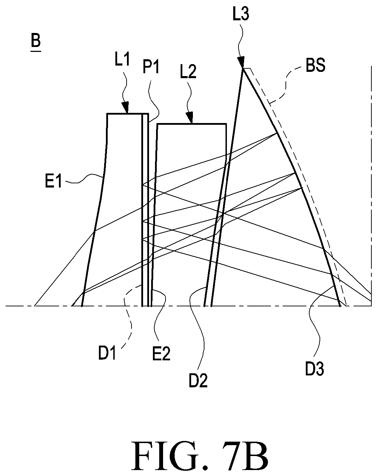

FIG. 7A is a view illustrating a wearable electronic device 500 (e.g., the electronic device 101 of FIG. 1 or the wearable electronic device 200, 300, 400 of FIGS. 2 to 5) according to an embodiment of the disclosure. FIG. 7B is a view illustrating an enlarged view illustrating a portion B of FIG. 7A according to an embodiment of the disclosure.

The lens assembly LA and the display D of FIG. 7A may be referred to as the lens assembly LA and the display D of FIG. 5. Descriptions overlapping those described above with reference to FIGS. 6A and 6B regarding the lens assembly LA and the display D of FIG. 7A may be omitted below.

According to an embodiment, the lens assembly LA of the wearable electronic device 500 may include the first polarization portion P1, the beam splitter BS, and the second polarization portion P2 sequentially disposed from the user's eye Y side to the display D side. According to an embodiment, the first polarization portion P1 (e.g., the first polarization portion P1 of FIG. 5) of the polarization assembly P may be disposed on, e.g., the display side surface D1 of the first lens L1. The second polarization portion P2 (e.g., the second polarization portion P2 of FIG. 5) of the polarization assembly P may be disposed on the cover window W. In an embodiment, when the first polarization portion P1 is substantially attached to a surface of any one of the lenses L1, L2, L3, the corresponding lens surface (e.g., the display side surface D1 of the first lens L1) may be substantially a plane.

According to an embodiment, the beam splitter BS (e.g., the beam splitter 405 of FIG. 5) may be disposed between the first polarization portion P1 and the second polarization portion P2. According to an embodiment, referring to FIG. 7B, the beam splitter BS may be provided on the display side surface D3 of the third lens L3. For example, the beam splitter BS may be stacked or formed on the display side surface D3 of the third lens L3 by substantially depositing or coating an optical material. In an embodiment, by disposing the first polarization portion P1 and the beam splitter BS functioning as reflective members, an optical length of the lens assembly LA may become larger than a mechanical (or physical) length, and a number of lenses (or lens surfaces) disposed between the first polarization portion P1 and the beam splitter BS may be minimized. For example, in a downsized lens assembly LA structure, an optical length may be sufficiently secured by the reflective members (e.g., the first polarization portion P1 and the beam splitter BS), and by reducing the number of lenses or lens surfaces disposed between the reflective members (e.g., the first polarization portion P1 and the beam splitter BS), an increase in refraction or scattering may be suppressed and the lens assembly LA may provide an image of enhanced quality. In an embodiment, the above-mentioned "refraction or scattering" may refer to birefringence caused by manufacturing tolerances or errors generated during an assembly process within an allowed range. For example, by reducing the number of lenses or lens surfaces disposed between the reflective members (e.g., the first polarization portion P1 and the beam splitter BS), birefringence of the lenses may be suppressed, and the lens assembly LA may provide an image of enhanced quality.

According to an embodiment, the display D and the lens assembly LA (or the display device) may have a field of view of about 100.00 degrees and a focal length (EFL) of about 14.97 mm, and may have an F-number (or Fno) of about 3.18. In an embodiment, the length DL of the effective pixel area of the display D may be about 23.20 mm, and the DL/EFL value may be about 1.55, which may satisfy [Formula 1] described above.

In the disclosure, the "length DL of the effective pixel area" of the display D may refer to a height of the display D. Here, the "height of the display D" is a length indicated as "DL" in FIGS. 6A, 7A, 9A, and 10A, and may refer to a straight length measured based on an axis perpendicular to the optical axis O.

In an embodiment, the lens assembly LA may be manufactured with specifications presented in [Table 4], and may have aspheric coefficients of [Tables 5] and [Table 6]. In [Table 4], "REF." illustrates reference numbers allocated to the lenses L1, L2, L3 and/or the polarization portions P1, P2 of FIGS. 7A and 7B, and "lens surface (surface)" describes ordinals allocated to lens surfaces or surfaces of the polarization portions that transmit (or reflect) visual information, and the ordinals may be sequentially allocated along a direction opposite to a light path from the display D to the user's eyes Y. The "Display window" (e.g., the cover window W of FIG. 6) in [Table 4] may be a display protection plate that is a substantially transparent plate.

**[Table 4]**

| REF. | lens surface (surface) | radius of curvature (radius) | Thicknes s (Thick) | material | Refractiv e index (nd) | Abbe number (vd) | Refractiv e mode |
|---|---|---|---|---|---|---|---|
| | EYE | infinity | infinity | | | | refraction |
| | STOP | infinity | 10.000 | | | | refraction |
| L1 | 2 | 103.994 | 3.300 | OPTIMA S7500 | 1.497 | 57.38 | refraction |
| | 3 | infinity | 0.300 | FILM | 1.495 | 57.47 | refraction |
| P1 | 5 | infinity | 0.130 | | | | refraction |
| L2 | 6 | 834.128 | 1.590 | SP3810 | 1.644 | 23.98 | refraction |
| | 7 | 98.572 | 0.140 | | | | refraction |
| L3 | 8 | 52.788 | 7.932 | OPTIMA S7500 | 1.497 | 57.38 | refraction |
| | 9 | -52.137 | -7.932 | OPTIMA S7500 | -1.497 | 57.38 | reflection |
| | 10 | 52.788 | -0.140 | | | | refraction |
| L2 | 11 | 98.572 | -1.590 | SP3810 | -1.644 | 23.98 | refraction |
| | 12 | 834.128 | -0.130 | | | | refraction |
| polarizati on film | 13 | infinity | -0.210 | FILM | -1.495 | 57.47 | refraction |
| polarizati on film | 14 | infinity | 0.210 | FILM | 1.495 | 57.47 | reflection |
| polarizati on film | 15 | infinity | 0.130 | | | | refraction |
| L2 | 16 | 834.128 | 1.590 | SP3810 | 1.644 | 23.98 | refraction |
| | 17 | 98.572 | 0.140 | | | | refraction |
| L3 | 18 | 52.788 | 7.932 | OPTIMA S7500 | 1.497 | 5.74E+0 1 | refraction |
| | 19 | -52.137 | 0.580 | | | | refraction |
| P2 | 20 | infinity | 0.176 | FILM | 1.495 | 5.75E+0 1 | refraction |
| Display window | 21 | infinity | 0.500 | BSC7_H OYA | 1.520 | 6.42E+0 1 | refraction |
| | 22 | infinity | 0.010 | | | | refraction |
| | display | infinity | 0.000 | | | | |

**[Table 5]**

| Surf | 2 | 7 | 8 | 9 | 10 |
|---|---|---|---|---|---|
| radius of curvature (Radius) | 1.0E+02 | 9.9E+01 | 5.3E+01 | -5.2E+01 | 5.3E+01 |
| k(conic) | 4.5E+00 | -1.1E+00 | -4.9E+01 | 6.2E-01 | -4.9E+01 |
| A(4th)/C4 | -5.4E-07 | 4.6E-08 | 0.0E+00 | -6.3E-06 | 0.0E+00 |
| B(6th)/C5 | 2.6E-08 | 0.0E+00 | 0.0E+00 | 3.1E-08 | 0.0E+00 |
| C(8th)/C6 | -7.1E-11 | 0.0E+00 | 0.0E+00 | -1.1E-10 | 0.0E+00 |
| D(10th)/C7 | 0.0E+00 | 0.0E+00 | 0.0E+00 | 2.2E-13 | 0.0E+00 |
| E(12th)/C8 | 0.0E+00 | 0.0E+00 | 0.0E+00 | -1.7E-16 | 0.0E+00 |

**[Table 6]**

| Surf | 11 | 17 | 18 | 19 |
|---|---|---|---|---|
| radius of curvature (Radius) | 9.9E+01 | 9.9E+01 | 5.3E+01 | -5.2E+01 |
| k(conic) | -1.1E+00 | -1.1E+00 | -4.9E+01 | 6.2E-01 |
| A(4th)/C4 | 4.6E-08 | 4.6E-08 | 0.0E+00 | -6.3E-06 |
| B(6th)/C5 | 0.0E+00 | 0.0E+00 | 0.0E+00 | 3.1E-08 |
| C(8th)/C6 | 0.0E+00 | 0.0E+00 | 0.0E+00 | -1.1E-10 |
| D(10th)/C7 | 0.0E+00 | 0.0E+00 | 0.0E+00 | 2.2E-13 |
| E(12th)/C8 | 0.0E+00 | 0.0E+00 | 0.0E+00 | -1.7E-16 |

FIG. 8 illustrates a path through which light output by the display D is focused or guided to the user's eyes Y in a wearable electronic device 600 according to an embodiment of the disclosure.

Descriptions of the first polarization portion P1, the second polarization portion P2, and the beam splitter (BS) 405 of FIG. 8 may be applied with the descriptions of the first polarization portion P1, the second polarization portion P2, and the beam splitter (BS) 405 described above with reference to FIG. 5, and below, common contents may be omitted and differences may be mainly described.

According to an embodiment, arrangement of the polarization portions P1, P2 and/or the beam splitter 405 of the polarization assembly P described above may provide an image of good quality while miniaturizing an optical system implemented with a limited number (e.g., at least three) of lenses L1, L2, L3. According to an embodiment, a polarization axis of the first polarizer 402 of the first polarization portion P1 and a polarization axis of the second polarizer 408 of the second polarization portion P2 may form 90 degrees. A fast axis of the first quarter wave plate 404 of the first polarization portion P1 and a fast axis of the second quarter wave plate 407 of the second polarization portion P2 may form 90 degrees. In the following description, reference to the anti-reflection members 401, 406 may be omitted.

Referring to FIG. 8, according to an embodiment, the wearable electronic device 600 may operate as follows. Light output from the display D may pass through the at least three lenses L1, L2, L3, the second polarization portion P2, the beam splitter BS, and the first polarization portion P1 of the lens assembly LA, and then reach the user's eyes Y. In this case, the second polarizer 408 of the second polarization portion P2 transmits a first linear polarization, e.g., vertical polarization (or p-polarization), and may not transmit a second linear polarization, e.g., horizontal polarization (or s-polarization). According to an embodiment, light output from the display D may pass through the third lens L3 and reach the second polarizer 408. Among light reaching the second polarizer 408, only vertical polarization (or p-polarization) may be transmitted. Light transmitted through the second polarizer 408 is converted into circular polarization (right circular polarization or left circular polarization) by the second quarter wave plate 407, and the circular polarization may sequentially pass through the beam splitter 405 and the second lens L2, and then reach the first quarter wave plate 404. The circularly polarized light reaching the first quarter wave plate 404 may be converted back into the linearly polarized light (e.g., vertically polarized light (or p polarized light)) while passing through the first quarter wave plate 404 and reach the reflective polarizer 403. Until reaching the reflective polarizer 403, the light may move toward the second direction (the display D → the user's eyes Y). The light reaching the reflective polarizer 403 is reflected by the reflective polarizer 403 and directed toward the first direction (the user's eyes Y → the display D), and may be converted into circular polarization (right circular polarization or left circular polarization) while transmitting through the first quarter wave plate 404 again. The circularly polarized light (right-circularly polarized light or left-circularly polarized light) may be reflected by the beam splitter 405 in the second direction and, at this time, the phase may be shifted (e.g., from left-circularly polarized light to right-circularly polarized light, or from right-circularly polarized light to left-circularly polarized light). The circular polarization with the converted phase may pass through the first quarter wave plate 404 and the reflective polarizer 403 along the second direction and reach the user's eyes Y. In this case, light transmitted through the first quarter wave plate 404 may be converted into horizontal polarization (or s-polarization) and reach the first polarizer 402 of the first polarization portion P1. The first polarizer 402 transmits horizontal polarization (or s-polarization), and may not transmit vertical polarization (or p-polarization). Light transmitted through the first polarizer 402 is horizontal polarization (or s-polarization) converted from the first quarter wave plate 404 with vertical polarization (or p-polarization) blocked once more, and may reach the user's eyes Y. However, the embodiment of FIG. 8 illustratively describes a state change of light passing through the wearable electronic device 600 according to an embodiment, and it is noted that conversion of polarization components by the reflective polarizer 403, the quarter wave plates 404, 407, the beam splitter 405, and/or the second polarizer 408 may differ from the described embodiment.

FIG. 9A is a view illustrating a wearable electronic device 600 (e.g., the electronic device 101 of FIG. 1 or the wearable electronic device 600 of FIG. 8) according to an embodiment of the disclosure. FIG. 9B is a view illustrating an enlarged view illustrating a portion C of FIG. 9A according to an embodiment of the disclosure.

The lens assembly LA and the display D of FIG. 9A may be referred to as the lens assembly LA and the display D of FIG. 8. Descriptions overlapping those described above with reference to FIGS. 6A and 6B regarding the lens assembly LA and the display D of FIG. 9A may be omitted below.

According to an embodiment, the lens assembly LA of the wearable electronic device 600 may include the first polarization portion P1, the beam splitter BS, and the second polarization portion P2 sequentially disposed from the user's eye Y side to the display D side. According to an embodiment, the first polarization portion P1 (e.g., the first polarization portion P1 of FIG. 8) of the polarization assembly P may be disposed on the display side surface D1 of the first lens L1. The second polarization portion P2 (e.g., the second polarization portion P2 of FIG. 8) of the polarization assembly P may be disposed on the user's eye side surface E3 of the third lens L3. In an embodiment, when the first polarization portion P1 is substantially attached to a surface of any one of the lenses L1, L2, L3, the corresponding lens surface (e.g., the display side surface D1 of the first lens L1 and/or the user's eye side surface E3 of the third lens L3) may be substantially a plane.

According to an embodiment, the beam splitter BS (e.g., the beam splitter 405 of FIG. 8) may be disposed between the first polarization portion P1 and the second polarization portion P2. According to an embodiment, referring to FIG. 9B, the beam splitter BS may be provided on the display side surface D2 of the second lens L2. For example, the beam splitter BS may be formed on the display side surface D2 of the second lens L2 by substantially depositing or coating an optical material.

According to an embodiment, the display D and the lens assembly LA (or the display device) may have a field of view of about 108.00 degrees and a focal length (EFL) of about 14.61 mm, and may have an F-number (or Fno) of about 3.18. In an embodiment, the length DL of the effective pixel area of the display D may be about 24.54 mm, and the DL/EFL value may be about 1.68, which may satisfy [Formula 1] described above.

In an embodiment, the lens assembly LA may be manufactured with specifications presented in [Table 7], and may have aspheric coefficients of [Tables 8] and [Table 9]. In [Table 7], "REF." illustrates reference numbers allocated to the lenses L1, L2, L3 and/or the polarization portions P1, P2 of FIGS. 9A and 9B, and "lens surface (surface)" describes ordinals allocated to lens surfaces or surfaces of the polarization portions that transmit (or reflect) visual information, and the ordinals may be sequentially allocated along a direction opposite to a light path from the display D to the user's eyes Y. The "Display window" (e.g., the cover window W of FIG. 6) in [Table 7] may be a display protection plate that is a substantially transparent plate.

**[Table 7]**

| REF. | lens surface (surface) | radius of curvature (radius) | Thicknes s (Thick) | material | Refractiv e index (nd) | Abbe number (vd) | Refractiv e mode |
|---|---|---|---|---|---|---|---|
| | EYE | infinity | infinity | | | | refraction |
| | STOP | infinity | 10.000 | | | | refraction |
| L1 | 2 | 94.708 | 2.942 | OPTIMA S7500 | 1.497 | 57.38 | refraction |
| | 3 | infinity | 0.300 | FILM | 1.495 | 57.47 | refraction |
| P1 | 5 | infinity | 0.200 | | | | refraction |
| L2 | 6 | 48.268 | 7.583 | OPTIMA S7500 | 1.497 | 57.38 | refraction |
| | 7 | -68.467 | -7.583 | OPTIMA S7500 | -1.497 | 57.38 | reflection |
| | 8 | 48.268 | -0.200 | | | | refraction |
| polarizati on film | 9 | infinity | -0.210 | FILM | -1.495 | 57.47 | refraction |
| polarizati on film | 10 | infinity | 0.210 | FILM | 1.495 | 57.47 | reflection |
| polarizati on film | 11 | infinity | 0.200 | | | | refraction |
| L2 | 12 | 48.268 | 7.583 | OPTIMA S7500 | 1.497 | 57.38 | refraction |
| | 13 | -68.467 | 0.150 | | | | refraction |
| P2 | 14 | infinity | 0.176 | FILM | 1.495 | 57.47 | refraction |
| L3 | 15 | infinity | 2.000 | EP8000 | 1.672 | 20.37 | refraction |
| | 16 | 94.371 | 1.590 | | | | refraction |
| Display window | 17 | infinity | 0.500 | BSC7_H OYA | 1.520 | 64.2 | refraction |
| | 18 | infinity | 0.010 | | | | refraction |
| | display | infinity | 0.000 | | | | |

**[Table 8]**

| Surf | 2 | 6 | 7 | 8 |
|---|---|---|---|---|
| radius of curvature (Radius) | 9.47E+01 | 4.83E+01 | -6.85E+01 | 4.83E+01 |
| k(conic) | -9.90E+01 | -3.79E+00 | -1.68E-02 | -3.79E+00 |
| A(4th)/C4 | 1.42E-06 | -1.58E-05 | -2.83E-06 | -1.58E-05 |
| B(6th)/C5 | 0.00E+00 | 0.00E+00 | -4.40E-09 | 0.00E+00 |
| C(8th)/C6 | 0.00E+00 | 0.00E+00 | 8.90E-13 | 0.00E+00 |
| D(10th)/C7 | 0.00E+00 | 0.00E+00 | -3.41E-15 | 0.00E+00 |
| E(12th)/C8 | 0.00E+00 | 0.00E+00 | 6.50E-18 | 0.00E+00 |

**[Table 9]**

| Surf | 12 | 13 | 16 |
|---|---|---|---|
| radius of curvature (Radius) | 4.83E+01 | -6.85E+01 | 9.44E+01 |
| k(conic) | -3.79E+00 | -1.68E-02 | -9.56E+01 |
| A(4th)/C4 | -1.58E-05 | -2.83E-06 | 0.00E+00 |
| B(6th)/C5 | 0.00E+00 | -4.40E-09 | 0.00E+00 |
| C(8th)/C6 | 0.00E+00 | 8.90E-13 | 0.00E+00 |
| D(10th)/C7 | 0.00E+00 | -3.41E-15 | 0.00E+00 |
| E(12th)/C8 | 0.00E+00 | 6.50E-18 | 0.00E+00 |

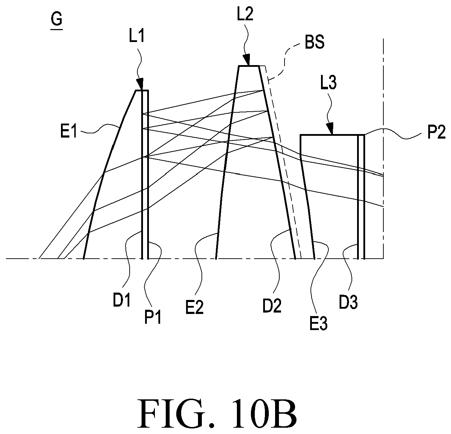

FIG. 10A is a view illustrating a wearable electronic device 700 (e.g., the electronic device 101 of FIG. 1 or the wearable electronic device 600 of FIG. 8) according to an embodiment of the disclosure. FIG. 10B is a view illustrating an enlarged view illustrating a portion G of FIG. 10A according to an embodiment of the disclosure.

The lens assembly LA and the display D of FIG. 10A may be referred to as the lens assembly LA and the display D of FIG. 8. Descriptions overlapping those described above with reference to FIGS. 6A and 6B regarding the lens assembly LA and the display D of FIG. 10A may be omitted below.

According to an embodiment, the lens assembly LA of the wearable electronic device 700 may include the first polarization portion P1, the beam splitter BS, and the second polarization portion P2 sequentially disposed from the user's eye Y side to the display D side. According to an embodiment, the first polarization portion P1 (e.g., the first polarization portion P1 of FIG. 8) of the polarization assembly P may be disposed on the display side surface D1 of the first lens L1. According to an embodiment, the second polarization portion P2 (e.g., the second polarization portion P2 of FIG. 8) of the polarization assembly P may be disposed on the display side surface D3 of the third lens L3. In an embodiment, when the first polarization portion P1 is substantially attached to a surface of any one of the lenses L1, L2, L3, the corresponding lens surface (e.g., the display side surface D1 of the first lens L1 and/or the display side surface D3 of the third lens L3) may be substantially a plane.

According to an embodiment, the beam splitter BS (e.g., the beam splitter 405 of FIG. 8) may be disposed between the first polarization portion P1 and the second polarization portion P2. According to an embodiment, referring to FIG. 10B, the beam splitter BS may be provided on the display side surface D2 of the second lens L2. For example, the beam splitter BS may be formed on the display side surface D2 of the second lens L2 by substantially depositing or coating an optical material.

According to an embodiment, the display D and the lens assembly LA (or the display device) may have a field of view of about 105.00 degrees and a focal length (EFL) of about 19.67 mm, and may have an F-number (or Fno) of about 3.18. In an embodiment, the length DL of the effective pixel area of the display D may be about 32.91 mm, and the DL/EFL value may be about 1.67, which may satisfy [Formula 1] described above.

In an embodiment, the lens assembly LA may be manufactured with specifications presented in [Table 10], and may have aspheric coefficients of [Table 11]. In [Table 10], "REF." illustrates reference numbers allocated to the lenses L1, L2, L3 and/or the polarization portions P1, P2 of FIGS. 10A and 10B, and "lens surface (surface)" describes ordinals allocated to lens surfaces or surfaces of the polarization portions that transmit (or reflect) visual information, and the ordinals may be sequentially allocated along a direction opposite to a light path from the display D to the user's eyes Y. The "Display window" (e.g., the cover window W of FIG. 6) in [Table 10] may be a display protection plate that is a substantially transparent plate.

**[Table 10]**

| REF. | lens surface (surface) | radius of curvature (radius) | thickness (Thick) | material | Refractiv e index (nd) | Abbe number (vd) | refraction mode |
|---|---|---|---|---|---|---|---|
| | EYE | infinity | infinity | | | | refraction |
| | STOP | infinity | 10.104 | | | | refraction |
| L1 | 2 | 107.389 | 4.000 | APEL55 14 | 1.547 | 56.09 | refraction |
| | 3 | infinity | 0.222 | FILM | 1.495 | 57.47 | refraction |
| P1 | 4 | infinity | 3.436 | | | | refraction |
| L2 | 5 | 159.630 | 5.730 | APEL55 14 | 1.547 | 56.09 | refraction |
| | 6 | -76.932 | -5.730 | APEL55 14 | -1.547 | 56.09 | reflection |
| | 7 | 159.630 | -3.436 | | | | refraction |
| polarizati on film | 8 | infinity | -0.222 | APEL55 14 | -1.547 | 56.09 | refraction |
| polarizati on film | 9 | infinity | 0.222 | APEL55 14 | 1.547 | 56.09 | reflection |
| polarizati on film | 10 | infinity | 3.436 | | | | refraction |
| L2 | 11 | 159.630 | 5.730 | APEL55 14 | 1.547 | 56.09 | refraction |
| | 12 | -76.932 | 0.663 | | | | refraction |
| L3 | 13 | -128.801 | 1.831 | EP5000 | 1.644 | 23.98 | reflection |
| | 14 | infinity | 0.300 | FILM | 1.495 | 57.47 | refraction |
| P2 | 15 | infinity | 1.829 | | | | refraction |
| Display window | 16 | infinity | 0.510 | BSC7_H OYA | 1.520 | 64.2 | refraction |
| | 17 | infinity | 0.104 | | | | refraction |
| | img | infinity | | | | | refraction |

**[Table 11]**

| Surf | 2 | 6 | 12 |
|---|---|---|---|
| radius of curvature (Radius) | 1.07E+02 | -7.69E+01 | -7.69E+01 |
| k(conic) | -8.46E+01 | 0.00E+00 | 0.00E+00 |
| A(4th)/C4 | 1.31E-05 | 7.06E-07 | 7.06E-07 |
| B(6th)/C5 | -7.60E-09 | 2.01E-09 | 2.01E-09 |
| C(8th)/C6 | 4.00E-12 | -2.58E-12 | -2.58E-12 |
| D(10th)/C7 | 0.00E+00 | 5.44E-15 | 5.44E-15 |
| E(12th)/C8 | 0.00E+00 | -9.22E-19 | -9.22E-19 |

The lens assembly (e.g., the lens assembly LA of FIGS. 5, 6A, 7A, 8, 9A, and 10A) and/or the wearable electronic device (e.g., the electronic device 101 of FIG. 1, the wearable electronic device 400, 500, 600, 700 of FIGS. 5, 6A, 7A, 8, 9A, and 10A) including the same according to the embodiment(s) of the disclosure may satisfy at least part of the specifications or conditions described above, and thus may be downsized while facilitating aberration control and implementing good image quality. For example, even when worn on the user's head or face, the lens assembly and/or the wearable electronic device including the same may reduce user fatigue.

However, objects of the disclosure may be variously determined within a range that does not depart from the spirit and scope of the disclosure. The effects obtainable from the disclosure are not limited to the effects mentioned above, and various effects directly or indirectly identified through this document may be provided.

According to an embodiment of the disclosure, a display device may be provided. The display device may include a display D configured to output light, and a lens assembly LA configured to guide light output from the display toward a user's eyes Y. The lens assembly may include at least three lenses L1, L2, L3 sequentially disposed from the user's eye side to the display side along an optical axis O, and a polarization assembly. The polarization assembly may include a first polarization portion P1, a beam splitter (BS) 405 and a second polarization portion P2 disposed sequentially from the user's eye side to the display side. The at least three lenses of the lens assembly may include synthetic resin. At least one of the at least three lenses may have an Abbe's number of 40 or less and have negative refractive power. The beam splitter of the polarization assembly may include a reflective surface formed as an aspheric surface without an inflection point. The display device may satisfy the following [Formula 1]. [Formula 1] $1 < DL / EFL < 3$
(where, DL is a length of an effective pixel area of the display, and EFL is a composite focal length of the entire optical system (or a composite focal length of the entire display device))

According to an embodiment, a field of view (FOV) of the display device may be equal to or greater than 100 degrees.

According to an embodiment, at least one of the user's eye side surface or the display side surface of the first polarization portion is configured as a plane, and at least one of the user's eye side surface or the display side surface of the second polarization portion may be configured as a plane.

According to an embodiment, the polarization assembly may be disposed between the display and a first lens L1 furthest from the display among the at least three lenses.

According to an embodiment, the polarization assembly may be disposed between a first lens L1 furthest from the display among the at least three lenses and a third lens L3 closest to the display among the at least three lenses.

According to an embodiment, the polarization assembly may be configured to reflect light output from the display at least twice between a first lens L1 furthest from the display among the at least three lenses and a lens L3 closest to the display among the at least three lenses.

According to an embodiment, the first polarization portion may include a first polarizer 402, a first reflective polarizer 403, and a first quarter wave plate 404. The second polarization portion may include a second polarizer 408 and a second quarter wave plate 407.

According to an embodiment, the first polarizer, the first reflective polarizer, and the first quarter wave plate of the first polarization portion may be combined with each other or spaced apart from each other with at least one of another polarization layer, an air layer, or a dummy layer therebetween.

According to an embodiment, the second polarizer and the second quarter wave plate of the second polarization portion may be combined with each other or spaced apart from each other with at least one of another polarization layer, an air layer, or a dummy layer therebetween.

According to an embodiment, a polarization axis of the first polarizer and a polarization axis of the second polarizer may form 90 degrees. A fast axis of the first quarter wave plate and a fast axis of the second quarter wave plate may form 90 degrees.

According to an embodiment, at least one of the first polarization portion or the second polarization portion includes an anti-reflection layer 401, 406.

According to an embodiment, the first polarization portion may be disposed between a first lens L1 furthest from the display among the at least three lenses and a second lens L2 second closest to the display among the at least three lenses. The second polarization portion may be disposed between a lens L3 closest to the display among the at least three lenses and the display.

According to an embodiment, the beam splitter may be disposed on the display side surface of a lens L3 closest to the display among the at least three lenses.

According to an embodiment, the first polarization portion may be disposed between a first lens L1 furthest from the display among the at least three lenses and a second lens L2 second closest to the display among the at least three lenses. The second polarization portion may be disposed between a lens L3 closest to the display among the at least three lenses and the second lens L2.

According to an embodiment, the beam splitter may be disposed on the display side surface of the second lens L2.

According to an embodiment of the disclosure, a wearable electronic device may be provided. The wearable electronic device may include a display D configured to output light, at least three lenses L1, L2, L3 sequentially disposed from the user's eye side to the display side along an optical axis O, and a polarization assembly P configured to reflect light output from the display at least twice between a first lens L1 furthest from the display among the at least three lenses and a lens L3 closest to the display among the at least three lenses. The polarization assembly may include a first polarization portion P1, a beam splitter (BS) 405 and a second polarization portion P2 disposed sequentially from the user's eye side to the display side. The at least three lenses of the lens assembly may include synthetic resin. At least one of the at least three lenses may have an Abbe's number of 40 or less and have negative refractive power. The beam splitter of the polarization assembly may include a reflective surface formed as an aspheric surface without an inflection point. The wearable electronic device may satisfy the following [Formula 1]. [Formula 1] $1 < DL / EFL < 3$
(where, DL is a length of an effective pixel area of the display, and EFL is a composite focal length of the entire optical system)

According to an embodiment, a field of view (FOV) of the display device may be equal to or greater than 100 degrees.

According to an embodiment, the polarization assembly may be disposed between the display and a first lens L1 furthest from the display among the at least three lenses.

At least one of the user's eye side surface or the display side surface of the first polarization portion is configured as a plane, and at least one of the user's eye side surface or the display side surface of the second polarization portion may be configured as a plane.

According to an embodiment, the first polarization portion may include a first polarizer 402, a first reflective polarizer 403, and a first quarter wave plate 404. The second polarization portion may include a second polarizer 408 and a second quarter wave plate 407.

According to an embodiment, the first polarizer, the first reflective polarizer, and the first quarter wave plate of the first polarization portion may be combined with each other or spaced apart from each other with at least one of another polarization layer, an air layer, or a dummy layer therebetween. The second polarizer and the second quarter wave plate of the second polarization portion may be combined with each other or spaced apart from each other with at least one of another polarization layer, an air layer, or a dummy layer therebetween.

Although the disclosure has been described by illustrating embodiments, it should be understood that an embodiment is for illustration purposes and is not intended to limit the disclosure. It is apparent to those skilled in the art that various changes may be made in form and detail within the full scope of the disclosure, including the appended claims and their equivalents, without departing from the spirit and scope of the disclosure.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A display device, comprising:
a display (D) configured to output light; and
a lens assembly (LA) configured to guide light output from the display toward a user's eye (Y), the lens assembly including:
at least three lenses (L1, L2, L3) sequentially arranged from the user's eye side to a display side along an optical axis (O); and
a polarization assembly (P) including a first polarization portion (P1), a beam splitter (BS; 405), and a second polarization portion (P2) arranged sequentially from the user's eye side to the display side,
wherein the at least three lenses of the lens assembly include synthetic resin,
wherein at least one of the at least three lenses has an Abbe's number of 40 or less and has negative refractive power,
wherein the beam splitter of the polarization assembly includes a reflective surface formed as an aspheric surface without an inflection point, and
wherein the display device satisfies the following [Formula 1], [Formula 1] $1 < DL / EFL < 3$
(wherein, DL is a length of an effective pixel area of the display, and EFL is a composite focal length of the entire optical system)

2. The display device according to claim 1, wherein a field of view (FOV) of the display device is equal to or greater than 100 degrees.

3. The display device of claim 1 or 2, wherein at least one of a user's eye side surface or a display side surface of the first polarization portion is configured as a plane, and at least one of a user's eye side surface or a display side surface of the second polarization portion is configured as a plane.

4. The display device according to any one of claims 1 to 3, wherein the polarization assembly is disposed between the display and a first lens (L1) furthest from the display among the at least three lenses.

5. The display device according to any one of claims 1 to 4, wherein the polarization assembly is disposed between a first lens (L1) furthest from the display among the at least three lenses and a third lens (L3) closest to the display among the at least three lenses.

6. The display device according to any one of claims 1 to 5, wherein the polarization assembly is configured to reflect light output from the display at least twice between a first lens (L1) furthest from the display among the at least three lenses and a lens (L3) closest to the display among the at least three lenses.

7. The display device of any one of claims 1 to 6, wherein the first polarization portion includes a first polarizer (402), a first reflective polarizer (403), and a first quarter wave plate (404), and
the second polarization portion includes a second polarizer (408) and a second quarter wave plate (407).

8. The display device of claim 7, wherein the first polarizer, the first reflective polarizer, and the first quarter wave plate of the first polarization portion are combined with each other or spaced apart from each other with at least one of another polarization layer, an air layer, or a dummy layer therebetween.

9. The display device of claim 7 or 8, wherein the second polarizer and the second quarter wave plate of the second polarization portion are combined with each other or spaced apart from each other with at least one of another polarization layer, an air layer, or a dummy layer therebetween.

10. The display device of any one of claims 7 to 9, wherein a polarization axis of the first polarizer and a polarization axis of the second polarizer form 90 degrees, and a fast axis of the first quarter wave plate and a fast axis of the second quarter wave plate form 90 degrees.

11. The display device of any one of claims 1 to 10, wherein at least one of the first polarization portion or the second polarization portion includes an anti-reflection layer (401; 406).

12. The display device of any one of claims 1 to 11, wherein the first polarization portion is disposed between a first lens (L1) furthest from the display among the at least three lenses and a second lens (L2) second closest to the display among the at least three lenses , and
the second polarization portion is disposed between a lens (L3) closest to the display among the at least three lenses and the display.

13. The display device of claim 12, wherein the beam splitter is disposed on a display side surface of a lens (L3) closest to the display among the at least three lenses.

14. The display device of any one of claims 1 to 11, wherein the first polarization portion is disposed between a first lens (L1) furthest from the display among the at least three lenses and a second lens (L2) second closest to the display, and
the second polarization portion is disposed between a lens (L3) closest to the display among the at least three lenses and the second lens (L2).

15. The display device of claim 14, wherein the beam splitter is disposed on the display side surface of the second lens (L2).
